# EUROPÄISCHE PATENTSCHRIFT

(11) **EP 3 885 185 B1**
(45) Veröffentlichungstag und Bekanntmachung des Hinweises auf die Patenterteilung: **01.05.2024**
(21) Anmeldenummer: 20166364.8
(22) Anmeldetag: 27.03.2020
(51) Int. Cl.: B60N 2/28

(54) **KINDERSITZSYSTEM**
CHILD SEAT SYSTEM
SYSTÈME DE SIÈGE POUR ENFANT

(43) Veröffentlichungstag der Anmeldung: 29.09.2021
(73) Patentinhaber: Hauck GmbH & Co. KG, 96242 Sonnefeld (DE)
(72) Erfinder: KIRSTEIN, Matthias, 96247 Michelau (DE)
(74) Vertreter: Raffay & Fleck

(56) Entgegenhaltungen:
- EP-A1- 2 368 755
- EP-B1- 2 368 755
- US-A- 5 567 008
- US-A1- 2014 035 333

## Beschreibung

Die Erfindung betrifft ein Kindersitzsystem mit einer Basis und wenigstens einem mit der Basis verriegelbar verbindbaren Kindersitz mit den Merkmalen des Oberbegriffs des Anspruchs 1.

Kindersitzsysteme, die eine Basis und wenigstens einen mit der Basis verriegelbar verbindbaren Kindersitz aufweisen, sind aus dem Stand der Technik allgemein bekannt. Sie können - und werden dies vielfach auch - insbesondere im Bereich der Kindersicherheitssitze für Kraftfahrzeuge eingesetzt. So kann zum Beispiel die Basis mit Halteklauen aufweisenden Isofix-Anschlussstreben verbunden sein, mittels derer sie mit entsprechenden, an einem Rahmen einer Fahrzeugbank oder eines Fahrzeugsitzes festgelegten Isofix-Anschlussbügeln lösbar verbunden werden kann. Auch ist es bekannt, eine solche Basis mittels eines in dem Kraftfahrzeug vorhandenen Sicherheitsgurtes an einer Sitzfläche, auf der die Basis aufgesetzt wird, zu fixieren.

Auf einer solchen Basis kann nun ein eigentlicher Kindersitz aufgesetzt und mit der Basis lösbar verbunden werden. Hierzu weist die Basis in einem Aufnahmebereich angeordnete Verriegelungsmittel auf und sind an dem Kindersitz in einem Anschlussbereich Haltemittel angeordnet, die für eine lösbar verriegelbare Aufnahme in den Verriegelungsmitteln der Basis ausgebildet sind, wenn der Kindersitz mit einem Anschlussbereich an dem Aufnahmebereich der Basis zur Anlage gebracht wird.

Der Kindersitz des Kindersitzsystems kann beispielsweise eine bereits für Neugeborene und auch für schon ältere Babys verwendbare Kindersitzschale, auch Babyschale genannt, sein, in der das Baby in einer im wesentlichen liegenden Position gehalten wird. Der Kindersitz kann aber auch ebenso gut ein Kleinkindsitz sein, in dem das Kind mit fortgeschrittenem Alter bereits aufrecht sitzen kann. Derartige Kleinkindsitze können von Kindern genutzt werden, bis diese in Kraftfahrzeugen auch ohne gesondert angeordneten Kindersicherheitssitz platziert werden und sitzen können.

Es sind auch Kindersitzsysteme bekannt, die mehr als einen Kindersitz zusammen mit einer einzigen Basis umfassen, wobei die Kindersitze jeweils mit der einen Basis verbunden werden können. So können die Nutzer das Kindersitzsystem im Gebrauch anpassen auf die Größe bzw. das Alter des Kindes, welches in dem Kindersitzsystem, genau einem Kindersitz, Platz nehmen und darin sitzend oder auch liegend zum Beispiel befördert werden soll.

Bei den bekannten Kindersitzsystemen weisen die Verriegelungsmittel häufig Hakenelemente auf, die um eine deutlich von einer Oberfläche des Aufnahmebereichs der Basis in Richtung des Inneren der Basis versetzt angeordnete Drehachse verdreht, bzw. verschwenkt oder verkippt werden können zwischen einer Riegelstellung und einer Freigabestellung. Die Haltemittel an dem Kindersitz umfassen dabei stangen- oder stabförmige Elemente, häufig Metallstangen, die zum Verbinden des Kindersitzes mit der Basis in den Bereich der Hakenelemente verbracht werden und an denen die Hakenelemente in der Riegelstellung einhaken und so die stangen- oder stabförmigen Elemente zurück- und damit den Kindersitz auf der Basis festhalten. Derartige Lösungen sind beispielsweise in der DE 100 22 789 A1 beschrieben und auch in der EP 2 720 903 B1.

In der EP 2 368 755 A1 ist ein Kindersitzsystem beschrieben, das eine Basis und einen mit der Basis in zwei unterschiedlich ausgerichteten Positionen verbindbaren Kindersitz aufweist. Der Kindersitz weist hierzu an vier Positionen laschenartig vorstehende Elemente und in diesen Elementen Durchbrüche auf. Die laschenartig vorstehenden Elemente werden zum Verbinden des Kindersitzes mit der Basis in dort vorgesehene Aufnahmeöffnungen eingeführt, wobei Riegelelemente in die Durchbrüche eingeführt werden, die so den Kindersitz an der Basis verriegeln.

Das Problem bei diesen Lösungen ist, dass der Kindersitz von einem Bediener in der Regel sehr präzise und von oben her mit dem Anschlussbereich auf den Aufnahmebereich der Basis aufgesetzt werden muss, sodass die stangen- oder stabförmigen Elemente an dem Kindersitz hinter die in die Freigabestellung bewegten Hakenelemente gelangen und von den dann in die Riegelstellung bewegten Hakenelementen zurückgehalten werden können. Insbesondere dann, wenn - zum Beispiel im Falle einer Babyschale - der Kindersitz nicht losgelöst, sondern schon mit einem darin liegenden oder sitzenden Baby oder Kleinkind auf die Basis aufgesetzt und mit dieser verbunden werden soll, kann ein solches Verbinden erhebliche Anstrengung verursachen, wenn zum Beispiel die Mutter des Kindes den Kindersitz mit dem darin liegenden oder sitzenden Kind anheben und von oben her zielgenau auf die Basis aufsetzen muss.

Hier setzt die Erfindung an und sucht Abhilfe zu schaffen, indem ein Kindersitzsystem der eingangs genannten Art angegeben werden soll, welches ein in der Bedienung vereinfachtes Aufsetzen und Verbinden eines Kindersitzes auf die und mit der Basis erlaubt.

Diese Aufgabe wird erfindungsgemäß gelöst mit einem Kindersitzsystem mit den Merkmalen des Patentanspruchs 1. Vorteilhafte Weiterbildungen eines solchen Kindersitzsystems sind in den abhängigen Ansprüchen 2 bis 15 angegeben.

Ein erfindungsgemäßes Kindersitzsystem hat zunächst, wie aus dem Stand der Technik umfangreich bekannt, eine Basis und wenigstens einen mit der Basis verriegelbar verbindbaren Kindersitz. Die Basis weist in einem Aufnahmebereich angeordnete Verriegelungsmittel auf, und der Kindersitz verfügt über in einem Anschlussbereich angeordnete Haltemittel. Die Haltemittel sind für eine lösbar verriegelbare Aufnahme in den Verbindungsmitteln der Basis ausgebildet, wenn der Kindersitz mit seinem Anschlussbereich an dem Aufnahmebereich der Basis zur Anlage gebracht wird. Die Haltemittel weisen wenigstens ein einen stabförmigen Abschnitt aufweisendes Halteelement auf. Die Verriegelungsmittel weisen wiederum wenigstens eine ausgehend von einer in dem Aufnahmebereich exponiert liegenden Oberfläche in die Basis hineinführende Aufnahmeöffnung zum Einführen des Haltemittels auf. Die Verriegelungsmittel weisen ferner ein Verriegelungselement zum Verriegeln des Halteelements in der Aufnahmeöffnung auf.

In erfindungsgemäßer Weise ist das Verriegelungselement im Bereich der Aufnahmeöffnung zwischen einer Einführ- und Freigabestellung und einer Riegelstellung verlagerbar an der Basis festgelegt und weist eine ebene Gleitoberfläche auf. Die ebene Gleitoberfläche ist insbesondere planar gestaltet und kann insbesondere flach und ohne jede Krümmung verlaufen. Erfindungsgemäß ist weiterhin in der Aufnahmeöffnung ein Aufnahmeabschnitt zum Aufnehmen des stabförmigen Abschnitts des Halteelements ausgebildet, in dem der stabförmige Abschnitt des Halteelements durch das Verriegelungselement verriegelnd gefangen ist, wenn sich dieses in der Riegelstellung befindet. Das Verriegelungselement bildet in der Einführ- und Freigabestellung mit seiner ebenen Gleitoberfläche eine Gleitebene, die eine Führung zum Einführen des stabförmigen Abschnitts des Halteelements in den Aufnahmeabschnitt bildet.

Durch diese erfindungsgemäße Ausgestaltung muss der Kindersitz zum Verbinden mit der Basis nicht exakt von oben her so auf die Basis aufgesetzt werden, dass die Haltemittel mit den Verriegelungsmitteln in übereinstimmender Position angeordnet sind. Vielmehr kann der Kindersitz mit seinem Anschlussbereich auch so auf dem Aufnahmebereich der Basis abgesetzt werden, dass hier ein Versatz zwischen Verriegelungsmitteln und Haltemitteln gegeben ist, kann der Kindersitz dann durch Verschieben mit seinem Anschlussbereich entlang des Aufnahmebereichs so bewegt werden, dass die Haltemittel, insbesondere der stabförmige Abschnitt des Halteelements, auf der ebenen Gleitoberfläche des Verriegelungselements aufliegen und in die Aufnahmeöffnung hineingleiten bis der stabförmige Abschnitt des Halteelements in dem Aufnahmeabschnitt zu liegen kommt und dort insbesondere an einem vorteilhafterweise dort angeordneten Anschlag anschlägt. Zum Verriegeln der so geschaffenen Verbindung zwischen Kindersitz und Basis wird nun das Verriegelungselement in die Riegelstellung verschwenkt, sodass der Kindersitz sicher und fest an der Basis gehalten ist. Durch diese Möglichkeit einer auch versetzt aufgesetzten Anordnung und eines Hineingleitens des Kindersitzes in die Riegelposition auf der Basis kann zum Beispiel eine Mutter einen Kindersitz des Systems in Form einer Babyschale in grober Ausrichtung auf der Basis abstellen und dann durch Verschieben auf der Basis besorgen, dass der stabförmige Abschnitt des Halteelements in die Aufnahmeöffnung und bis in den Aufnahmeabschnitt hineingleitet und der Kindersitz an der Basis verriegelt werden kann. Der Kindersitz muss nun nicht mehr genau auf der Basis abgesetzt und hierzu gegebenenfalls mehrfach angehoben oder langandauernd und zielend oberhalb der Basis gehalten werden.

Das Verriegelungselement kann zum Beispiel leistenförmig oder brettartig gebildet sein und nach Art einer Falltür die Aufnahmeöffnung in der Riegelstellung überdecken, in der Einführ- und Freigabestellung in die Aufnahmeöffnung hinein tauchen und dabei die Gleitebene bilden, über die der stabförmige Abschnitt des Halteelements in die Aufnahmeöffnung hinein und bis zu dem Aufnahmeabschnitt rutscht oder gleitet.

Um das Verriegelungselement aus der Riegelstellung in die Einführ- und Freigabestellung bewegen zu können, kann insbesondere an der Basis ein Betätigungsmechanismus angeordnet sein. Dieser Betätigungsmechanismus kann - muss dies allerdings nicht - auch für ein Verlagern des Verriegelungselements aus der Einführ- und Freigabestellung in die Riegelstellung verwendbar gestaltet sein. Es ist aber ebenso gut auch möglich und in einer vorteilhaften Ausgestaltung der Erfindung vorgesehen, dass das Verriegelungselement federbelastet in die Riegelstellung gezwungen ist. Hierfür kann ein oder können mehrere geeignete Federelemente oder dergleichen vorgesehen sein.

Mit Vorteil kann weiterhin vorgesehen sein, dass die Aufnahmeöffnung mit einer Einführschräge versehen ist, die ausgehend von der in dem Aufnahmebereich exponiert liegenden Oberfläche schräg in die Basis hinein verläuft und an deren Ende der Aufnahmeabschnitt liegt. Diese Einführschräge ist dann insbesondere so gestaltet, dass auf ihr der stabförmige Abschnitt des Halteelements auf einer Oberkante oder Oberfläche gleiten kann, wenn dieser in die Aufnahmeöffnung hinein überführt wird. Diese Einführschräge kann zum Beispiel materialverstärkt gebildet sein, zum Beispiel durch Einlage einer Metallleiste, um an dieser stark beanspruchten Stelle einem Verschleiß vorzubeugen. Wenn eine solche Einführschräge vorgesehen ist, kann insbesondere und mit Vorteil vorgesehen sein, dass das Verriegelungselement in der Einführ- und Freigabestellung mit der Gleitoberfläche im Wesentlichen bündig parallel zu einer Oberkante oder Oberfläche der Einführschräge ausgerichtet ist. Durch diese Maßnahme bilden die Gleitoberfläche des Verriegelungselements und die Oberkante oder Oberfläche der Einführschräge gemeinsam eine Führungsebene, entlang derer der stabförmige Abschnitt des Halteelements in die Aufnahmeöffnung hineingleiten kann bis zu dem Aufnahmeabschnitt.

Mit Vorteil kann das Verriegelungselement in der Riegelstellung mit der Gleitoberfläche im Wesentlichen bündig mit der in dem Aufnahmebereich exponiert liegenden Oberfläche ausgerichtet sein. Dies ist insbesondere deshalb von Vorteil, da so der auf die Basis aufgesetzte Kindersitz bei einem Verschieben ohne Versatz auf die Oberfläche des Verriegelungselementes in der Riegelstellung auflaufen und dann, insbesondere wenn das Verriegelungselement durch Federkraft in die Riegelstellung vorgespannt ist, dieses gegen die Federkraft in Richtung in die Aufnahmeöffnung hinein drücken und dann auf der Gleitoberfläche die Aufnahmeöffnung hineingleiten kann bis zu dem und in den Aufnahmeabschnitt.

Mit Vorteil kann das Verriegelungselement im Bereich eines Stirnendes der Aufnahmeöffnung um eine Schwenkachse schwenkbar an der Basis festgelegt sein. Diese Schwenkachse kann mit besonderem Vorteil nahe der oder an der in dem Aufnahmebereich exponiert liegenden Oberfläche liegen, sodass das Verriegelungselement oberflächennah, insbesondere bündig mit der Oberfläche gelagert sein kann. Ein solches Verriegelungselement kann dann weiterhin und insbesondere gemäß einer vorteilhaften Weiterbildung der Erfindung an einer der Schwenkachse gegenüberliegenden Kante einen Anschlag aufweisen, der in der Riegelstellung des Verriegelungselements den stabförmigen Abschnitt des Halteelements in dem Aufnahmeabschnitt hält. Ein solcher Anschlag kann zum Beispiel ein quer zu der Gleitoberfläche geführter, sich in Richtung der Aufnahmeöffnung erstreckender Absatz oder Fortsatz sein, der in der Riegelstellung die Tiefe der Aufnahmeöffnung überbrückt bis hin zu dem Aufnahmeabschnitt, den dieser Absatz oder Fortsatz dann in Richtung der freien Aufnahmeöffnung versperrt und so den darin befindlichen stabförmigen Abschnitt des Halteelements dort verriegelt und fixiert.

Das Halteelement kann insbesondere als ein in dem Anschlussbereich an dem Kindersitz gebildeter Haltebügel gebildet sein, der in Abschnitt den stabförmigen Abschnitt aufweist. Grundsätzlich sind zwar auch durchgehende Stangen o. ä. Konstruktionen denkbar. Derartige Haltebügel, wie sie hier mit besonderem Vorteil vorgeschlagen werden, eignen sich aber besonders deshalb, da diese einzelnen in die jeweilige Aufnahmeöffnung eingebracht werden können und es damit nicht erforderlich ist, die Aufnahmeöffnung für den Durchtritt einer durchgehenden Stange etwa seitlich zu öffnen. Dies erlaubt dann wiederum eine stabilere Konstruktion.

Gemäß einer weiteren vorteilhaften Weiterbildung des erfindungsgemäßen Kindersitzsystems kann der Aufnahmebereich in einem relativ zu einem Grundkörper der Basis um wenigstens 45°, vorzugsweise um wenigstens 90°, rotierbaren Drehteller gebildet sein. Dieser Drehteller kann dann zum Beispiel mittels einer Verriegelung in einer Einbaudrehstellung mit einer für den Gebrauch des auf der Basis montierten Kindersitzes vorgesehenen Stellung verriegelbar sein. Gerade dann, wenn das Erfindungsgemäße Kindersitzsystem zum Einsatz in einem Kraftfahrzeug gedacht ist, kann ein solcher Drehteller das Einsetzen des Kindersitzes noch einmal erleichtern. So kann der Drehteller beispielsweise um 90° rotiert werden, sodass der Kindersitz zum Beispiel von einer Hecktür des Fahrzeuges aus einfach in dieser um 90° verdrehten Stellung eingesetzt und in einer wie oben beschriebenen Weise mit der Basis verbunden werden kann. Ist der Kindersitz dann mit der Basis verbunden und verriegelt, kann der Drehteller zurückgedreht werden in die Gebrauchsstellung, in der der Kindersitz mit einer Front in Fahrtrichtung oder entgegen der Fahrtrichtung orientiert ist, und kann der Drehteller in dieser Position verrastet werden.

Mit Vorteil kann weiterhin an der Basis ein von der Basis, insbesondere aufwärtsgerichtet, vorstehender Sicherheitsbügel angeordnet sein. Dieser Sicherheitsbügel kann vorzugsweise in dem oder angrenzend an den Aufnahmebereich an der Basis festgelegt sein. Er kann weiterhin insbesondere an einem wie vorstehend erläuterten Drehteller der Basis angeordnet sein. Der Sicherheitsbügel kann mit Vorteil zu einer Außenseite der Basis aufsteigen und einen Abschnitt von wenigstens 100°, vorzugsweise von wenigstens 140°, insbesondere von wenigstens 180° einfassen. Er besteht mit Vorteil aus einem formstabilen Material wie einem Metall oder einem stabilen, insbesondere verstärkten, wie faserverstärkten, Kunststoff. Der Sicherheitsbügel kann dabei mit Vorteil so angeordnet sein, dass er mit einem vorgegebenen Abstand einen Teil eines Kindersitzes umgreift. Er ist insbesondere in einer Einbau- und Gebrauchslage des Kindersitzes in oder entgegen der Fahrtrichtung orientiert. Dieser Sicherheitsbügel dient dazu, bei einem als Kindersicherheitssitz in einem Fahrzeug verwendeten Kindersitzsystem nach der Erfindung bei einem Aufprall den Kindersitz abzufangen und Aufprallenergie aufzunehmen und insbesondere ein Ablösen des Kindersitzes von der Basis zu verhindern. Insbesondere kann z.B. eine Babyschale mit Kunststoffwänden, die sich bei einem Aufprall durch die auftretende Energie bewusst verformen sollen zur Dissipation dieser Energie, sich bis zu dem Sicherheitsbügel ausdehnen und wird dann dort gefangen und gehalten. Auch bietet der Sicherheitsbügel einen weiteren Seitenaufprallschutz.

Auch wenn es grundsätzlich möglich ist, dass die Verriegelungsmittel nur ein Verriegelungselement und eine Aufnahmeöffnung umfassen und dass die Haltemittel lediglich ein Halteelement beinhalten, wird doch bevorzugt, dass derer mehrere vorhanden sind in unterschiedlichen Positionen, wobei die Positionen der Haltemittel zu den Positionen der Verriegelungsmittel korrespondierend angeordnet sind. Auf diese Weise wird ein sicherer Halt des Kindersitzes an der Basis erhalten. Mit Vorteil sollte hier ein möglicher Betätigungsmechanismus dann gleichzeitig auf alle Verriegelungselemente wirken, um diese gleichzeitig und mit einem Bedienungshandgriff in die Einführ- und Freigabestellung verbringen zu können. Eine solche Anordnung mit mehreren an unterschiedlichen Positionen angeordneten Verriegelungsmitteln und Haltemitteln kann insbesondere so gebildet sein, dass diese jeweils vier an Eckpunkten von zueinander kongruenten Rechtecken bzw. Quadraten angeordnete Haltemittel bzw. Verriegelungsmittel aufweist. Eine solche Anordnung hat sich als besonders stabil und zugleich einfach zu bedienen und umzusetzen erwiesen.

Auch das erfindungsgemäße Kindersitzsystem kann mehr als einen, zum Beispiel zwei oder mehr unterschiedlich gestaltete Kindersitze enthalten, zum Beispiel eine Babyschale oder Kindersitzschale und einen Kleinkindsitz. Dem Nutzer können die einzelnen Elemente eines solchen Kindersitzsystems individuell angeboten werden, sodass er die Möglichkeit haben kann, eine Basis und einen für ihn passenden Kindersitz zu erwerben. Er kann aber auch sogleich mehrere Kindersitze in einem System erwerben und dann den für ihn passenden Kindersitz auswählen und mit der Basis verbinden, um ein Kind in den entsprechenden Kindersitz unterzubringen.

Das erfindungsgemäße Kindersitzsystem kann insbesondere für die Festlegung in einem Kraftfahrzeug ausgelegt sein und einen Kindersitz in Form eines Kindersicherheitssitzes für ein Kraftfahrzeug enthalten, der zum Beispiel eine Gurtanordnung zum Anschnallen eines in dem Kindersitz sitzenden oder liegenden Kindes mit umfasst. Das Kindersitzsystem kann aber auch in einer anderen Weise umgesetzt sein, zum Beispiel als Bestandteil eines Kinderwagens oder eines Kinderkarrens, wobei die Basis dann mit einem Fahrgestell des Kinderwagens oder Kinderkarrens verbunden ist.

Weitere Vorteile und Merkmale eines erfindungsgemäßen Kindersitzsystems ergeben sich aus der nachfolgenden Beschreibung eines möglichen Ausführungsbeispiels anhand der beigefügten Figuren. Dabei zeigen:
- Figur 1: eine perspektivische Schrägaufsicht auf einen Ausschnitt einer Basis eines erfindungsgemäßen Kindersitzsystems in einem möglichen Ausführungsbeispiel;
- Figur 2: eine perspektivische Ansicht schräg von unten auf einen Ausschnitt eines Kindersitzes eines erfindungsgemäßen Kindersitzsystems in dem möglichen Ausführungsbeispiel;
- Figur 3: eine schematische Teil-Seitenansicht auf die Basis des Kindersitzsystems;
- Figur 4: eine Längsschnittdarstellung durch einen Ausschnitt des Kindersitzsystem mit auf der Basis festgelegtem Kindersitz;
- Figur 5: eine Schrägaufsicht auf einen Ausschnitt der Basis mit zwei Verriegelungsmitteln mit je einem in der Riegelstellung und einem in der Einführ- und Freigabestellung befindlichen Verriegelungselement;
- Figur 6: in zwei Darstellungen a und b in einer vergrößerten Ansicht von der Seite ein Verriegelungsmittel mit in der Riegelstellung befindlichem Verriegelungselement (Figur 6a) und mit in der Einführ- und Freigabestellung befindlichem Verriegelungselement (Figur 6b);
- Figur 7: eine perspektivische Ansicht eines Kindersitzsystems mit auf der Basis aufgesetztem und mit der Basis verriegelten Kindersitz in einer Gebrauchsstellung;
- Figur 8: eine perspektivische Ansicht eines Kindersitzsystems mit auf der Basis aufgesetztem und mit der Basis verriegelten Kindersitz in einer Einbaustellung; und
- Figur 9: eine perspektivische Ansicht eines Kindersitzsystems mit auf der Basis aufgesetztem mit der Basis noch nicht verriegelten Kindersitz in einer Einbaustellung.

Nachfolgend wird anhand der Figuren ein mögliches Ausführungsbeispiel für ein erfindungsgemäßes Kindersitzsystem beschrieben und näher erläutert. Die Figuren zeigen dabei, jeweils in Ausschnittdarstellungen, Bestandteile des erfindungsgemäßen Kindersitzsystems und insbesondere solche Strukturen, in denen sich die erfindungswesentlichen Merkmale verkörpern. Die Figuren sind dabei keineswegs als vollständige Konstruktionszeichnungen zu verstehen und auch nicht zwingend maßstabsgerecht.

Ein erfindungsgemäßes Kindersitzsystem besteht zunächst aus einer Basis, die in dem gezeigten Ausführungsbeispiel mit dem Bezugszeichen 1 bezeichnet ist, und einem Kindersitz, in dem Ausführungsbeispiel mit dem Bezugszeichen 13 versehen.

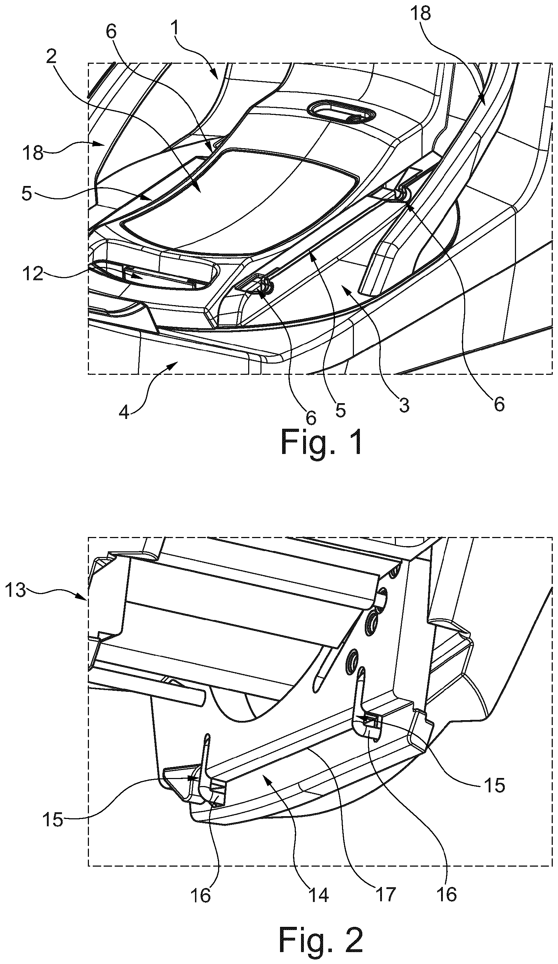

Der Kindersitz 13 kann auf die Basis 1 aufgesetzt und mit dieser lösbar verbunden und verriegelt werden. Die Basis 1 (vergleiche Figuren 1, 3 und 5) hat einen allgemein auf ihrer Oberseite ausgebildeten Aufnahmebereich 2. Dieser Aufnahmebereich 2 ist in dem gezeigten Ausführungsbeispiel in einem Drehteller 3 ausgebildet, der an einem Grundkörper 4 der Basis 1 relativ zu diesem Grundkörper 4 um eine quer zu dem Aufnahmebereich 2 verlaufende Drehachse verdrehbar angeordnet ist. In dem Aufnahmebereich 2 ist ein zentraler Abschnitt muldenartig gekrümmt gebildet. Dort kann ein entsprechender zentraler Abschnitt des Kindersitzes 13 aufgesetzt werden. Seitlich dieses zentralen Abschnittes befinden sich Leisten 5, die im Wesentlichen parallel zueinander orientiert sind. In diesen Leisten 5 sind an einer vorderen und einer hinteren Position jeweils Aufnahmeöffnungen 6 ausgebildet, die Bestandteil von Verriegelungsmitteln sind, mittels derer der Kindersitz 13 mit Haltemitteln an der Basis 1 lösbar verriegelt und damit festgelegt werden kann. In dem Ausführungsbeispiel sind an der Basis 1 insgesamt vier solche Aufnahmeöffnungen 6 angeordnet, die in einer Aufsicht auf den Aufnahmebereich 2 an den Eckpunkten eines Rechtecks platziert sind.

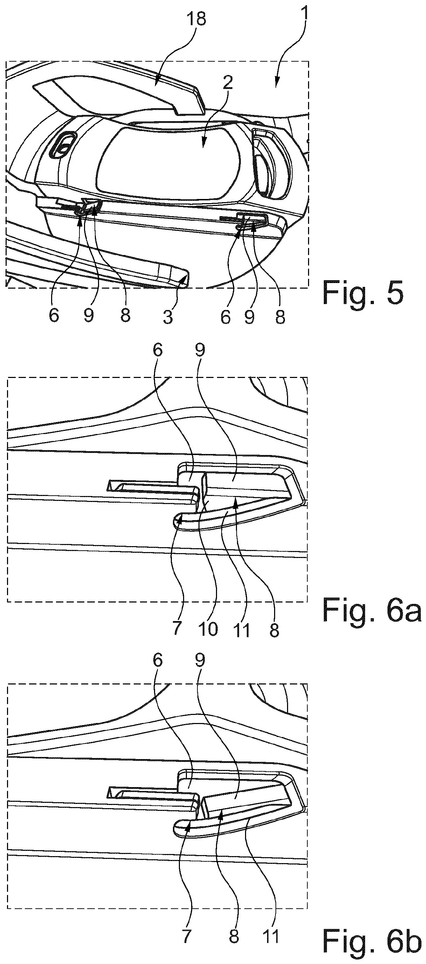

In den Aufnahmeöffnungen 6 sind jeweils Aufnahmeabschnitte 7 ausgebildet zum Aufnehmen eines Haltemittels an dem Kindersitz 13 in einer nachfolgend noch näher zu beschreibenden Weise. Diese Aufnahmeabschnitte 7 sind beispielsweise in der Figur 5 und - besonders gut - in den Figuren 6a und 6b zu erkennen. Ebenfalls in den Figuren 6a und 6b gut zu erkennen ist, dass in den Aufnahmeöffnungen 6 jeweils ein Verriegelungselement 8 angeordnet ist, welches blockartig bzw. leistenartig an einem Längsende verschwenkbar mit der Basis 1 verbunden ist. Die Verriegelungselemente 8 weisen auf einer zu dem Aufnahmebereich 2 exponiert liegenden Oberfläche eine Gleitoberfläche 9 auf, die geradlinig und eben ausgebildet ist. An einer Vorderkante 10 ist das jeweilige Verriegelungselement 8 mit einer Erstreckung in die Tiefe der Aufnahmeöffnung 6 hinein ausgebildet, um so in einer wie in Figur 6a gezeigten Riegelstellung den Aufnahmeabschnitt 7, der nach Art eines Hinterschnitts in der Aufnahmeöffnung 6 gebildet ist, zu verriegeln und zu verschließen. In Figur 6b ist das Verriegelungselement 8 in einer Einführ- und Freigabestellung gezeigt, in der es um seine Schwenkachse in die Aufnahmeöffnung 6 hinein verschwenkt ist und den Weg in die Tiefe der Aufnahmeöffnung 6 und in den Aufnahmeabschnitt 7 hinein freigibt. Die Aufnahmeöffnung 6 weist einseitig eine Einführschräge 11 auf, die ausgehend von der Oberfläche des Aufnahmebereichs 2 in die Tiefe der Aufnahmeöffnung 6 hineinreicht und in den Aufnahmeabschnitt 7 mündet. Diese Einführschräge 11 ist in dem gezeigten Ausführungsbeispiel durch eine Metalleinlage verstärkt, um hier einem vorzeitigen Verschleiß vorzubeugen.

In der wie in Figur 6b gezeigten Einführ- und Freigabestellung ist das Verriegelungselement 8 soweit in die Aufnahmeöffnung 6 hinein verschwenkt, dass es mit seiner Gleitoberfläche 9 parallel zu der Einführschräge 11 angeordnet ist und mit dieser fluchtet. Hierfür kann insbesondere ein Anschlag in der Tiefe der Aufnahmeöffnung 6 oder an einem anderen Abschnitt in der Basis 1 vorgesehen sein, der eine weitere Schwenkbewegung des Verriegelungselements 8 in die Aufnahmeöffnung 6 hinein verhindert.

Ein mit einem Betätigungselement 12 versehener Betätigungsmechanismus, der hier in seinen weiteren Einzelheiten nicht näher gezeigt ist, erlaubt ein Verlagern der Verriegelungselemente 8 aus der in Figur 6a gezeigten Riegelstellung in die in Figur Ziffer 6b gezeigte Einführ- und Freigabestellung, um den Weg zu dem, bzw. in den Aufnahmeabschnitt 7 freizugeben. In dem gezeigten Ausführungsbeispiel sind die Verriegelungselemente 8 mittels Federelementen und von diesen aufgebrachten Federspannungen in die in Figur Ziffer 6a gezeigte Riegelstellung vorgespannt, können durch Betätigen des Betätigungselements 12 entgegen der Federspannung in die in Figur 6b gezeigte Einführ- und Freigabestellung verlagert werden, können aber auch durch einfaches Aufbringen von Druck oder einer Gewichtskraft auf die Gleitoberfläche 9 selbsttätig und gegen die Federkraft in die Einführ- und Freigabestellung verschwenken.

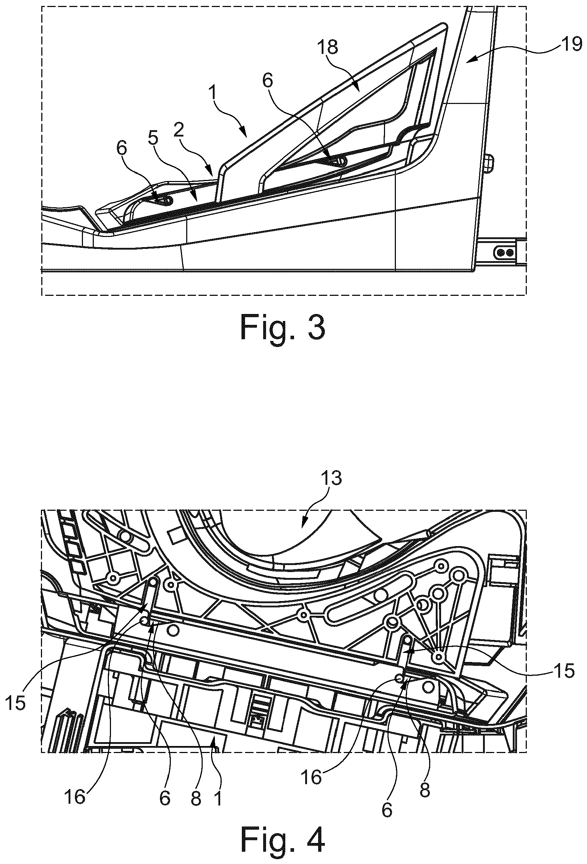

In den Figuren 1, 3 und 5 ist ein an der Basis 1, genauer an dem Drehteller 3, festgelegter Sicherheitsbügel 18 zu erkennen, der sich ausgehend von etwa einer mittigen Position des Drehtellers 3 aufsteigend nach aufwärts erstreckt, zugleich den Drehteller 3 und den daran angeordneten Aufnahmebereich 2 bogenförmig umgibt um ca. 180°. Dieser Sicherheitsbügel 18 ist nach Art eines Geländers geführt und aus einem formstabilen Material gebildet, insbesondere einem Metall, wie z.B. Aluminium oder Stahl, oder einem formstabilen Kunststoff, wie insbesondere einem faserverstärkten Kunststoffmaterial. Weiterhin ist, insbesondere in Figur 3, zu erkennen, dass die Basis 1 in ihrem Grundkörper 4 mit einem hochgezogenen Abschnitt 19 gebildet ist, mit dem sich die Basis 1 in einer Anordnung auf eine Sitz oder einer Sitzbank eines Kraftfahrzeuges gegen die Sitz- oder Banklehne abstützen kann, insbesondere um Drehmomente abzufangen, wie sie im Falle eines Aufpralls auftreten können.

Ein Kindersitz 13 des erfindungsgemäßen Kindersitzsystems ist ausschnittsweise in Figur 2 gezeigt. In der dort gezeigten Teilansicht von der Unterseite her ist ein Anschlussbereich 14 zu erkennen, mit dem der Kindersitz 13 in dem Aufnahmebereich 2 der Basis 1 angeordnet wird zum Verbinden des Kindersitzes 13 mit der Basis 1. In dem Anschlussbereich 14 sind in einer vorderen und einer hinteren Position zwei Haltebügel 15 zu erkennen, die jeweils einen Abschnitt 16 aufweisen mit einem stabförmigen Verlauf. Die Haltebügel 15 mit den Abschnitten 16 formen Haltemittel, die in dem Anschlussbereich 14 des Kindersitzes vorgesehen sind. Der Querschnitt der Haltebügel 15 ist in diesem gezeigten Ausführungsbeispiel, insbesondere in dem Abschnitt 16, kreisförmig. Der Kindersitz 13 hat an einer in der Figur 2 nicht gezeigten, dem dort erkennbaren Anschlussbereich 14 gegenüberliegenden Bereich einen analog ausgebildeten zweiten Abschnitt mit einem Anschlussbereich 14 und dort weiteren zwei ausgebildeten Haltebügeln 15 mit den entsprechenden Abschnitten 16. Die Haltebügel 15 an dem Kindersitz 13 sind ebenfalls an den Eckpunkten eines Rechtecks platziert, wobei dieses Rechteck kongruent ist zu dem Rechteck, das durch die Positionen der Aufnahmeöffnungen 6 aufgespannt wird. In dem Anschlussbereich 14 des Kindersitzes 13 ist ein Absatz 17 ausgebildet, der bei auf der Basis 1 aufgesetztem Kindersitz 13 auf einer Oberkante der jeweiligen Leiste 5 liegt und somit für einen Formschluss und eine feste Verbindung gegenüber quer zu der Längserstreckung der Leiste 5 auftretenden Kräften sorgt.

In dem gezeigten Ausführungsbeispiel kann der Kindersitz 13 eine Babyschale bzw. Kinderliegeschale sein. Es kommen aber auch andere Arten von Kindersitzen, zum Beispiel ein Kleinkindsitz infrage, mit einem analog ausgebildeten Anschlussbereich 14 mit Haltemitteln in Form der Haltebügel 15.

In der Figur 4 ist in einer Längsschnittdarstellung ein Ausschnitt des erfindungsgemäßen Kindersitzsystems mit dem Kindersitz 13 gezeigt, wie dieser an der Basis 1 festgelegt und mit der Basis 1 verbunden ist. Zu erkennen ist hier, dass die Haltebügel 15 mit ihren Abschnitten 16 in die Aufnahmeöffnungen 6 eingesetzt und bis in die Aufnahmeabschnitte 7 eingeführt sind, wobei die Verriegelungselemente 8 in der Riegelstellung befindlich sind und mit ihren Vorderkanten 10 die Abschnitte 16 der Haltebügel 15 in den Aufnahmeabschnitten 7 halten und dort verriegeln.

Zum Verbinden des Kindersitzes 13 mit der Basis 1 muss nun nicht der Kindersitz 13 exakt derart über der Basis 1 und deren Aufnahmebereich 2 platziert werden, dass die Abschnitte 16 der Haltebügel 15 genau oberhalb der Aufnahmeöffnungen 6 liegen. Vielmehr kann der Kindersitz 13 auf der Basis 1 mit dem Anschlussbereich 14 dem Aufnahmebereich 2 zugewandt abgesetzt werden und dann durch Verschieben mit den Abschnitten 16 der Haltebügel 15 über die Gleitoberflächen 9 der dann in der Einführ- und Entriegelungsstellung befindlichen Verriegelungselemente 8 auf einer durch diese Elemente gebildeten schiefen Ebene bis in die Aufnahmeabschnitte 7 hineingleiten, wobei dann die Verriegelungselemente 8 getrieben durch die Federkraft zurück in die Riegelstellung gezogen bzw. gedrückt werden und dann mit ihren Vorderkanten 10 die Abschnitte 16 der Haltebügel 15 in den Aufnahmeabschnitten 7 verriegeln. Zum Lösen des Kindersitzes 13 von der Basis 1 wird durch Betätigen des Betätigungselements 12 erreicht, dass die Verriegelungselemente 8 wieder in die Einführ- und Freigabestellung verlagert werden, sodass die Abschnitte 16 der Haltebügel 15 in umgekehrter Richtung entlang der Gleitoberflächen 9 der Verriegelungselemente 8 die Schrägen aufwärts und aus den Aufnahmeöffnungen Ziffer 6 herausgleiten können, sodass der Kindersitz 13 durch eine Zugbewegung aus der Verriegelung mit der Basis 1 gelöst und dann von der Basis 1 abgehoben werden kann.

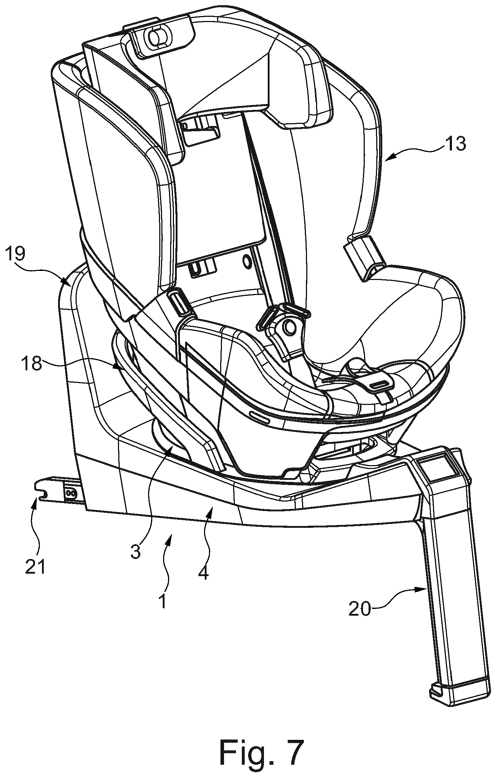

In dem gezeigten Ausführungsbeispiel ist das Kindersitzsystem ein solches für einen Kindersicherheitssitz für ein Kraftfahrzeug. Dieses ist in den Figuren 7 bis 9 noch einmal in verschiedenen Gesamtansichten dargestellt. An der Basis 1 ist ein Stützbein 20 ausgebildet, das in einer an sich bekannten Weise einem Abstützen der Basis gegen den Boden des Fußraums eines Kraftfahrzeuges dient, um so ein "Abtauchen" der Basis im Falle eines Aufpralls und dadurch ausgelöster Drehmomente zu verhindern. Die Basis weist weiterhin Isofix-Klauen 21 auf, mit denen sie, ebenfalls in bekannter Weise, an entsprechenden Haltebügeln des Fahrzeugsitzsystems festgelegt werden kann.

In Figur 7 ist das Kindersitzsystem mit einem wie vorstehend beschrieben auf der Basis 1 aufgesetzten und daran festgelegten Kindersitz 13 in einer Gebrauchsstellung gezeigt. In dieser Stellung ist der Kindersitz 13 mit einer Blickrichtung des Kindes in Fahrtrichtung des Kraftfahrzeuges ausgerichtet.

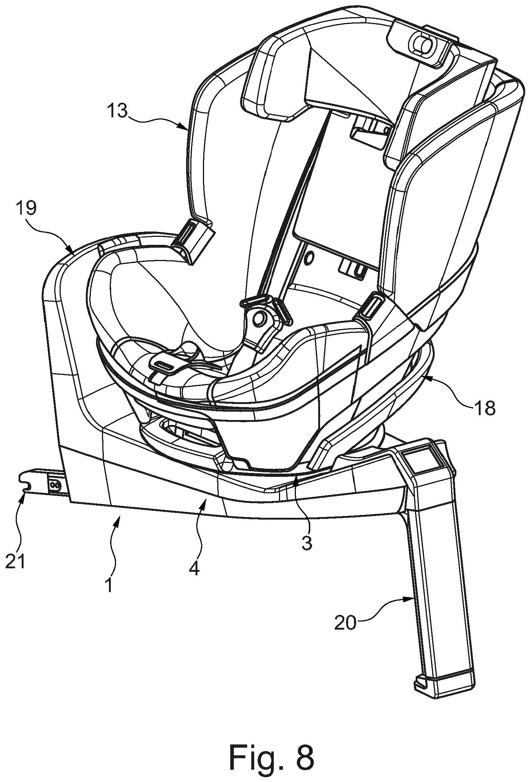

In Figur 8 ist das Kindersitzsystem aus Figur 7 in einer Einbaulage gezeigt, in der der Kindersitz 13 mit der Basis 1 zwar bereits verbunden und verriegelt ist, in der der Drehteller 3 der Basis 1 allerdings um 90° gegenüber dem Grundkörper 2 rotiert ist, so dass der Kindersitz seitlich auf der Basis 1 sitzt. Auf diese Weise erleichtert der Drehteller 3 auf der Basis 1 ein Einsetzen eines Kindes in den Kindersitz 13. Wenn nämlich die Basis 1 mit ihrem Grundkörper 4 mittels der Isofix-Klauen 21 an einem Fahrzeugsitz oder einer Fahrzeugrückbank des Kraftfahrzeugs festgelegt ist, so kann durch Drehen des Drehtellers 3 so erreicht werden, dass zum Beispiel durch eine Beifahrertür oder eine Hecktür des Kraftfahrzeuges ein Kind in den in einer Längsrichtung orientierten der Kindersitz 13 eingesetzt werden kann. Sitzt das Kind dann richtig in dem Kindersitz 13 und ist dort angeschnallt, so kann der Kindersitz 13 auf dem Drehteller 3 wieder zurückgeschwenkt werden in die in Figur 7 gezeigte Gebrauchsposition und kann dann in dieser Grundposition verriegelt werden.

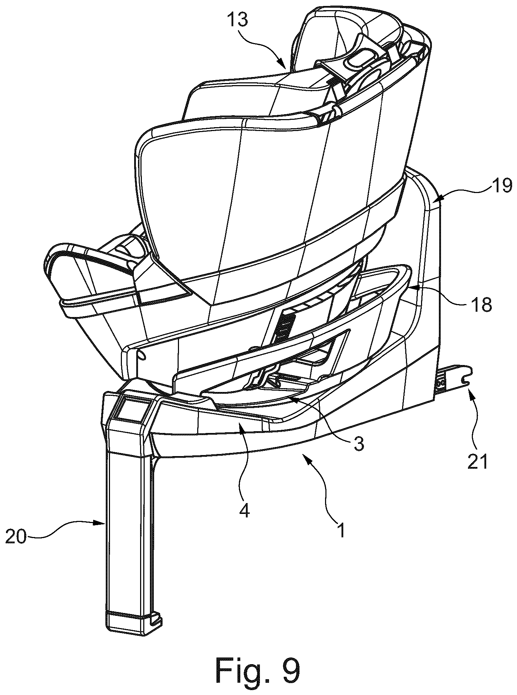

In der um 90° verdrehten Position des Drehtellers 3 gegenüber dem Grundkörper 4 der Basis 1 kann der Kindersitz 13 auch auf die Basis 1 aufgesetzt und mit dieser verbunden werden. Gezeigt ist dies in Figur 9, in der der Kindersitz 13 zwar mit dem Anschlussbereich 14 auf dem Aufnahmebereich 2 der Basis 1, der auf dem Drehteller 3 ausgebildet ist, abgesetzt, aber noch nicht mit der Basis 1 verriegelt verbunden ist. Durch weiteres Einschieben des Kindersitzes 13 in die in der Figur 9 nach rechts vorn weisende Richtung wird der Kindersitz 13 dann mit den Abschnitten 16 der Haltebügel 15 auf die Gleitoberflächen 9 der Verriegelungselemente 8 aufgeschoben, so dass die Abschnitte 16 dann in der wie oben beschriebenen Weise in die Aufnahmeabschnitte 7 eingleiten und dann durch die in die Riegelstellung zurückgezwungenen Verriegelungselemente 8 dort in der wie vorstehend beschriebenen Weise zurückgehalten und verriegelnd festgelegt werden. Es kann der Kindersitz 13 auch bereits mit einem in dem Kindersitz 13 eingesetzten bzw. hineingelegten Kind oder Baby mit Blickrichtung zu der den Kindersitz 13 einsetzenden Person, auf die Basis 1 aufgesetzt und auch bereits mit dieser verriegelt werden. Anschließend wird der Drehteller 3 zurückgedreht in die Gebrauchsposition, in der das Kind dann wie in Figur 7 gezeigt mit Blickrichtung in Fahrtrichtung oder auch, in einer anderen Konstellation, insbesondere mit anderen Kindersitz, z.B. in Form eine Babyliegeschale, entgegen der Fahrtrichtung orientiert ist, je nach den Einbauvorgaben des Kindersitzes 13.

In den Figuren 7 bis 9 ist auch der Sicherheitsbügel 18 noch einmal gut zu erkennen. Auch kann hier gesehen werden, dass dieser den Kindersitz 13 geländerartig umgibt und einen zusätzlichen Schutz bietet. Insbesondere hilft der Sicherheitsbügel 18 dabei ein Ablösen des Kindesitzes 13 von der Basis 1 im Falle eines Aufpralls zu verhindern, indem er beim Abfangen von Aufprallenergie unterstützt und den sich unter einem Aufprall an dieser Stelle gewollt verformenden Kindersitz 13 zurückhält.

Aus der vorstehenden Beschreibung sind noch einmal die besonderen Vorteile der erfindungsgemäßen Konstruktion deutlich geworden. Dabei ist aber anzumerken, dass das Ausführungsbeispiel die Erfindung lediglich erläutert, nicht jedoch auf diese konkrete Ausführungsform beschränkt. Es sind weitere Ausgestaltungsvarianten denkbar, die im Rahmen der Erfindung liegen, und die der Fachmann anhand der Ansprüche und der vorstehenden Beschreibung des Ausführungsbeispiels wie auch der voranstehenden allgemeinen Beschreibung konzipieren und umsetzen kann, ohne hierbei erfinderisch tätig werden zu müssen.

### Bezugszeichenliste

- 1: Basis
- 2: Aufnahmebereich
- 3: Drehteller
- 4: Grundkörper
- 5: Leiste
- 6: Aufnahmeöffnung
- 7: Aufnahmeabschnitt
- 8: Verriegelungselement
- 9: Gleitoberfläche
- 10: Vorderkante
- 11: Einführschräge
- 12: Betätigungselement
- 13: Kindersitz
- 14: Anschlussbereich
- 15: Haltebügel
- 16: Abschnitt
- 17: Absatz
- 18: Sicherheitsbügel
- 19: hochgezogener Abschnitt
- 20: Stützbein
- 21: Isofix-Klaue

## Patentansprüche

1. Kindersitzsystem mit einer Basis (1) und wenigstens einem mit der Basis (1) verriegelbar verbindbaren Kindersitz (13), wobei die Basis (1) in einem Aufnahmebereich (2) angeordnete Verriegelungsmittel aufweist und wobei der Kindersitz (13) in einem Anschlussbereich (14) angeordnete Haltemittel aufweist für eine lösbar verriegelbare Aufnahme in den Verriegelungsmitteln der Basis (1), wenn der Kindersitz (13) mit seinem Anschlussbereich (14) an dem Aufnahmebereich (2) der Basis (1) zur Anlage gebracht wird, wobei die Haltemittel wenigstens ein einen stabförmigen Abschnitt (16) aufweisendes Halteelement (15) aufweisen und wobei die Verriegelungsmittel wenigstens eine ausgehend von einer in dem Aufnahmebereich (2) exponiert liegenden Oberfläche in die Basis (1) hinein führende Aufnahmeöffnung (6) zum Einführen des Halteelements (15) sowie ein Verriegelungselement (8) zum Verriegeln des Halteelements (15) in der Aufnahmeöffnung (6) aufweisen, **dadurch gekennzeichnet, dass** das Verriegelungselement (8) im Bereich der Aufnahmeöffnung (6) zwischen einer Einführ- und Freigabestellung und einer Riegelstellung verlagerbar an der Basis (1) festgelegt ist und eine ebene Gleitoberfläche (9) aufweist und dass in der Aufnahmeöffnung (6) ein Aufnahmeabschnitt (7) zum Aufnehmen des stabförmigen Abschnitts (16) des Halteelements (15) ausgebildet ist, in dem der stabförmige Abschnitt (16) des Halteelements (15) durch das in der Riegelstellung befindliche Verriegelungselement (8) verriegelnd gefangen ist, wobei das Verriegelungselement (8) in der Einführ- und Freigabestellung mit seiner ebenen Gleitoberfläche (9) eine Gleitebene bildet, die eine Führung zum Einführen des stabförmigen Abschnitts (16) des Halteelements (15) in den Aufnahmeabschnitt (7) bildet.

2. Kindersitzsystem nach Anspruch 1, **gekennzeichnet durch** einen an der Basis (1) angeordneten Betätigungsmechanismus (12) zum Verlagern des wenigstens einen Verriegelungselements (8) jedenfalls aus der Riegelstellung in die Einführ- und Freigabestellung.

3. Kindersitzsystem nach einem der vorhergehenden Ansprüche, **dadurch gekennzeichnet, dass** das Verriegelungselement (8) federbelastet in die Riegelstellung gezwungen ist.

4. Kindersitzsystem nach einem der vorhergehenden Ansprüche, **dadurch gekennzeichnet, dass** die Aufnahmeöffnung (6) mit einer Einführschräge (11) versehen ist, die ausgehend von der in dem Aufnahmebereich (2) exponiert liegenden Oberfläche schräg in die Basis (1) hinein verläuft und an deren Ende der Aufnahmeabschnitt (7) liegt.

5. Kindersitzsystem nach Anspruch 4, **dadurch gekennzeichnet, dass** das Verriegelungselement (8) in der Einführ- und Freigabestellung mit der Gleitoberfläche (9) im Wesentlichen bündig parallel zu einer Oberkante oder Oberfläche der Einführschräge (11) ausgerichtet ist.

6. Kindersitzsystem nach einem der vorhergehenden Ansprüche, **dadurch gekennzeichnet, dass** das Verriegelungselement (8) in der Riegelstellung mit der Gleitoberfläche (9) im Wesentlichen bündig mit der in dem Aufnahmebereich (2) exponiert liegenden Oberfläche ausgerichtet ist.

7. Kindersitzsystem nach einem der vorhergehenden Ansprüche, **dadurch gekennzeichnet, dass** das Verriegelungselement (8) im Bereich eines Stirnendes der Aufnahmeöffnung (6) um eine Schwenkachse schwenkbar an der Basis (1) festgelegt ist.

8. Kindersitzsystem nach Anspruch 7, **dadurch gekennzeichnet, dass** das Verriegelungselement (8) an einer der Schwenkachse gegenüberliegenden Kante (10) einen Anschlag aufweist, der in der Riegelposition des Verriegelungselements (8) den stabförmigen Abschnitt (16) des Halteelements (15) in dem Aufnahmeabschnitt (7) hält.

9. Kindersitzsystem nach einem der vorhergehenden Ansprüche, **dadurch gekennzeichnet, dass** das Halteelement (8) als ein in dem Anschlussbereich (14) an dem Kindersitz (13) gebildeter Haltebügel gebildet, der in einem Abschnitt den stabförmigen Abschnitt (16) aufweist.

10. Kindersitzsystem nach einem der vorhergehenden Ansprüche, **dadurch gekennzeichnet, dass** der Aufnahmebereich (2) in einem relativ zu einem Grundkörper (4) der Basis (1) um wenigstens 45°, vorzugsweise um wenigstens 90°, rotierbaren Drehteller (3) gebildet ist.

11. Kindersitzsystem nach einem der vorhergehenden Ansprüche, **dadurch gekennzeichnet, dass** an der Basis, vorzugsweise in dem oder angrenzend an den Aufnahmebereich (2) ein von der Basis, insbesondere aufwärtsgerichtet, vorstehender Sicherheitsbügel (18) angeordnet ist, wobei, wenn dieser Anspruch 11 auf den Anspruch 10 rückbezogen ist, der Sicherheitsbügel (18) insbesondere an dem Drehteller (3) festgelegt ist.

12. Kindersitzsystem nach einem der vorhergehenden Ansprüche, **dadurch gekennzeichnet, dass** die Basis (1) in dem Aufnahmebereich (2) mehrere jeweils eine Aufnahmeöffnung (6) und ein Verriegelungselement (8) aufweisende Verriegelungsmittel aufweist und dass an dem Kindersitz (13) mehrere, in zu den Positionen der Verriegelungsmittel korrespondierenden Positionen des Anschlussbereichs (14) angeordnete Haltemittel angeordnet sind.

13. Kindersitzsystem nach Anspruch 12, dass in dem Aufnahmebereich (2) der Basis (1) vier an den Eckpunkten eines ersten Rechtecks oder Quadrats angeordnete Verriegelungsmitteln angeordnet sind und dass in dem Anschlussbereich (14) an dem Kindersitz (13) vier an Eckpunkten eines zu dem ersten Rechteck oder Quadrat kongruenten zweiten Rechtecks oder Quadrats zu den Verriegelungsmitteln korrespondierende Haltemittel angeordnet sind.

14. Kindersitzsystem nach einem der vorhergehenden Ansprüche, **dadurch gekennzeichnet, dass** es wenigstens zwei unterschiedlich gestaltete Kindersitze (13), insbesondere Kindersitze (13) in Form einer Babyschale und eines Kleinkindsitzes, enthält, die jeweils Anschlussbereiche (14) und darin angeordnet wenigstens ein Haltemittel aufweisen.

15. Kindersitzsystem nach einem der vorhergehenden Ansprüche, **dadurch gekennzeichnet, dass** es für die Festlegung in einem Kraftfahrzeug ausgelegt ist und dass der Kindersitz (13) ein Kindersicherheitssitz für ein Kraftfahrzeug ist.

## Claims

1. A child seat system having a base (1) and at least one child seat (13) which can be lockably connected to the base (1), wherein the base (1) has locking means arranged in a receiving region (2) and wherein the child seat (13) has retaining means arranged in a connection region (14) for a releasably lockable reception in the locking means of the base (1), when the child seat (13) is brought to bear with its connection region (14) against the receiving region (2) of the base (1), wherein the holding means comprise at least one holding element (15) having a rod-shaped section (16) and wherein the locking means comprise at least one receiving opening (6) leading into the base (1) from a surface exposed in the receiving region (2) for inserting the holding element (15) and a locking element (8) for locking the holding element (15) in the receiving opening (6), **characterised in that** the locking element (8) is fixed to the base (1) in the region of the receiving opening (6) so as to be displaceable between an insertion and release position and a locking position and has a flat sliding surface (9), and **in that** a receiving section (7) for receiving the rod-shaped section (16) of the holding element (15) is formed in the receiving opening (6), in which the rod-shaped section (16) of the holding element (15) is caught in a locking manner by the locking element (8) located in the locking position, wherein the locking element (8) in the insertion and release position forms a sliding plane with its flat sliding surface (9), which forms a guide for inserting the rod-shaped section (16) of the holding element (15) into the receiving section (7).

2. A child seat system according to claim 1, **characterised by** an actuating mechanism (12) arranged on the base (1) for displacing said at least one locking element (8) at least from the locking position into the insertion and release position.

3. A child seat system according to one of the preceding claims, **characterised in that** the locking element (8) is spring-loaded and forced into the locking position.

4. A child seat system according to one of the preceding claims, **characterised in that** the receiving opening (6) is provided with an insertion slope (11) which, starting from the surface exposed in the receiving region (2), extends obliquely into the base (1) and at the end of which the receiving section (7) is located.

5. A child seat system according to claim 4, **characterised in that** the locking element (8) in the insertion and release position is aligned with the sliding surface (9} substantially flush parallel to an upper edge or surface of the insertion slope (11).

6. A child seat system according to one of the preceding claims, **characterised in that** the locking element (8) in the locking position is aligned with the sliding surface (9) substantially flush with the surface exposed in the receiving region (2).

7. A child seat system according to one of the preceding claims, **characterised in that** the locking element (8) is fixed to the base (1) in the region of an end face of the receiving opening (6) so as to be pivotable about a pivot axis.

8. A child seat system according to claim 7, **characterised in that** the locking element (8) has a stop on an edge (10) opposite the pivot axis which, in the locking position of the locking element (8), holds the rod-shaped section (16) of the holding element (15) in the receiving section (7).

9. A child seat system according to one of the preceding claims, **characterised in that** the holding element (8) is formed as a retaining bracket which is formed in the connection region (14) on the child seat (13) and which has the rod-shaped section (16) in a cut-off section.

10. A child seat system according to one of the preceding claims, **characterised in that** the receiving region (2) is formed in a turntable (3) which can be rotated through at least 45°, preferably through at least 90°, relative to a base body (4) of the base (1).

11. A child seat system according to one of the preceding claims, **characterised in that** a safety bar (18) projecting from the base, in particular in an upward direction, is arranged on the base, preferably in or adjacent to the receiving region (2), wherein, if this claim 11 relates back to claim 10, the safety bar (18) is fixed in particular to the rotary divider (3).

12. A child seat system according to one of the preceding claims, **characterised in that** the base (1) in the receiving region (2) has a plurality of locking means each having a receiving opening (6) and a locking element (8), and **in that** a plurality of retaining means arranged in positions of the connection region (14) corresponding to the positions of the locking means are arranged on the child seat (13).

13. A child seat system according to claim 12, in that four locking means arranged at the corner points of a first rectangle or square are arranged in the receiving region (2) of the base (1), and in that four retaining means corresponding to the locking means are arranged in the connection region (14) on the child seat (13) at corner points of a second rectangle or square congruent with the first rectangle or square.

14. A child seat system according to one of the preceding claims, **characterised in that** it contains at least two differently designed child seats (13), in particular child seats (13) in the form of a baby seat and a toddler seat, which each have connection regions (14) and at least one retaining means arranged therein.

15. A child seat system according to one of the preceding claims, **characterised in that** it is designed to be fixed in a motor vehicle and **in that** the child seat (13) is a child safety seat for a motor vehicle.

## Revendications

1. Système de siège pour enfant comportant une base (1) et au moins un siège pour enfant (13) pouvant être relié de manière verrouillable à la base (1), dans lequel la base (1) comporte des moyens de verrouillage disposés dans une zone de réception (2) et dans lequel le siège pour enfant (13) comporte des moyens de retenue disposés dans une zone de connexion (14) pour une réception verrouillable de manière libérable dans les moyens de verrouillage de la base (1), lorsque le siège d'enfant (13) est mis en appui avec sa zone de connexion (14) contre la zone de réception (2) de la base (1), dans lequel les moyens de maintien comprennent au moins un élément de maintien (15) ayant une section en forme de tige (16) et dans lequel les moyens de verrouillage comprennent au moins une ouverture de réception (6) menant dans la base (1) à partir d'une surface exposée dans la zone de réception (2) pour insérer l'élément de maintien (15) et un élément de verrouillage (8) pour verrouiller l'élément de maintien (15) dans l'ouverture de réception (6),
**caractérisé en ce que** l'élément de verrouillage (8) est fixé à la base (1) dans la zone de l'ouverture de réception (6) de manière à pouvoir se déplacer entre une position d'insertion et de libération et une position de verrouillage et présente une surface de glissement plate (9), et **en ce qu'**une section de réception (7) destinée à recevoir la section en forme de tige (16) de l'élément de maintien (15) est formée dans l'ouverture de réception (6), dans laquelle la section en forme de tige (16) de l'élément de maintien (15) est verrouillée par l'élément de verrouillage (8) situé dans la position de verrouillage, dans laquelle l'élément de verrouillage (8) en position d'insertion et de libération forme un plan de glissement avec sa surface de glissement plate (9), qui forme un guide pour l'insertion de la section en forme de tige (16) de l'élément de maintien (15) dans la section de réception (7).

2. Système de siège pour enfant selon la revendication 1, **caractérisé par** un mécanisme d'actionnement (12) disposé sur la base (1) pour déplacer ledit au moins un élément de verrouillage (8) au moins de la position de verrouillage à la position d'insertion et de libération.

3. Système de siège pour enfant selon l'une des revendications précédentes, **caractérisé par le fait que** l'élément de verrouillage (8) est monté sur ressort et actionné dans la position de verrouillage.

4. Système de siège pour enfant selon l'une des revendications précédentes, **caractérisé en ce que** l'ouverture de réception (6) est pourvue d'une pente d'insertion (11) qui, à partir de la surface exposée dans la zone de réception (2), s'étend obliquement dans la base (1) et à l'extrémité de laquelle se trouve la section de réception (7).

5. Système de siège pour enfant selon la revendication 4, **caractérisé en ce que** l'élément de verrouillage (8) en position d'insertion et de libération est aligné avec la surface de glissement (9} sensiblement au niveau d'un bord ou d'une surface supérieure de la pente d'insertion (11).

6. Système de siège pour enfant selon l'une des revendications précédentes, **caractérisé en ce que** l'élément de verrouillage (8) en position de verrouillage est aligné avec la surface de glissement (9) sensiblement au niveau de la surface exposée dans la zone de réception (2).

7. Système de siège pour enfant selon l'une des revendications précédentes, **caractérisé en ce que** l'élément de verrouillage (8) est fixé à la base (1) dans la zone d'une face d'extrémité de l'ouverture de réception (6) de manière à pouvoir pivoter autour d'un axe de pivotement.

8. Système de siège pour enfant selon la revendication 7, **caractérisé en ce que** l'élément de verrouillage (8) présente une butée sur un bord (10) opposé à l'axe de pivotement qui, dans la position de verrouillage de l'élément de verrouillage (8), maintient la section en forme de tige (16) de l'élément de maintien (15) dans la section de réception (7).

9. Système de siège pour enfant selon l'une des revendications précédentes, **caractérisé en ce que** l'élément de retenue (8) est constitué comme une patte de retenue qui est formée dans la zone de connexion (14) sur le siège pour enfant (13) et qui a la section en forme de tige (16) dans une section coupée.

10. Système de siège pour enfant selon l'une des revendications précédentes, **caractérisé en ce que** la zone de réception (2) est formée dans un plateau tournant (3) qui peut tourner d'au moins 45°, de préférence d'au moins 90°, par rapport à un corps de base (4) de la base (1).

11. Système de siège pour enfant selon l'une des revendications précédentes, **caractérisé en ce qu'**une barre de sécurité (18) faisant saillie à partir de la base, en particulier dans une direction ascendante, est disposée sur la base, de préférence dans ou à côté de la zone de réception (2), dans laquelle, si cette revendication 11 se rapporte à nouveau à la revendication 10, la barre de sécurité (18) est fixée en particulier au diviseur rotatif (3).

12. Système de siège pour enfant selon l'une des revendications précédentes, **caractérisé en ce que** la base (1) dans la zone de réception (2) comporte une pluralité de moyens de verrouillage ayant chacun une ouverture de réception (6) et un élément de verrouillage (8), et **en ce qu'**une pluralité de moyens de retenue disposés dans des positions de la zone de connexion (14) correspondant aux positions des moyens de verrouillage sont disposés sur le siège pour enfant (13).

13. Système de siège pour enfant selon la revendication 12, en ce que quatre moyens de verrouillage disposés aux points d'angle d'un premier rectangle ou carré sont disposés dans la zone de réception (2) de la base (1), et en ce que quatre moyens de retenue correspondant aux moyens de verrouillage sont disposés dans la zone de connexion (14) sur le siège pour enfant (13) aux points d'angle d'un second rectangle ou carré congruent avec le premier rectangle ou carré.

14. Système de siège pour enfant selon l'une des revendications précédentes, **caractérisé en ce qu'**il contient au moins deux sièges pour enfant (13) de conception différente, en particulier des sièges pour enfant (13) sous la forme d'un siège pour bébé et d'un siège pour tout-petit, qui présentent chacun des zones de connexion (14) et au moins un moyen de retenue qui y est disposé.

15. Système de siège pour enfant selon l'une des revendications précédentes, **caractérisé en ce qu'**il est conçu pour être fixé dans un véhicule automobile et **en ce que** le siège pour enfant (13) est un siège de sécurité pour enfant pour véhicule automobile.
